Europäisches Patentamt

European Patent Office

Office européen des brevets

(19)

(11)  EP 0 522 607 B1

(12)  **EUROPEAN PATENT SPECIFICATION**

(45) Date of publication and mention
of the grant of the patent:
**26.06.1996  Bulletin 1996/26**

(51) Int Cl.⁶: **H04L 12/46**

(21) Application number: **92201322.2**

(22) Date of filing: **11.05.1992**

(54) **A method and an arrangement for synchronizing two or more communication networks of the time multiplex type**

Verfahren und Vorrichtung zur Synchronisierung von zwei oder mehreren zeitmultiplexen Nachrichtennetzen

Méthode et arrangement de synchronisation de deux ou plusieurs réseaux de communication à multiplexage temporel

(84) Designated Contracting States:
**DE FR GB**

(30) Priority: **29.05.1991  SE 9101635**

(43) Date of publication of application:
**13.01.1993  Bulletin 1993/02**

(73) Proprietor: **TELEFONAKTIEBOLAGET L M ERICSSON**
**S-126 25 Stockholm (SE)**

(72) Inventors:
 • **Gauffin, Lars**
  **S-144 00 Rönninge (SE)**

 • **Hakansson, Lars**
  **S-183 54 Täby (SE)**
 • **Bohm, Christer**
  **S-115 24 Stockholm (SE)**
 • **Lindgren, Per**
  **S-113 56 Stockholm (SE)**

(74) Representative: **Delhage, Einar et al**
**Bergenstrahle & Lindvall AB**
**Box 17704**
**118 93 Stockholm (SE)**

(56) References cited:
**EP-A- 0 374 883**          **EP-A- 0 409 539**
**GB-A- 2 230 679**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

Technical area

The present invention relates to a method and an arrangement for synchronizing two or more individual communication networks of the time multiplex type, in order to form a composite network thereof, said individual communication networks having nodes via which cyclic transmission of time frames is performed, said time frames including time slots intended for data transmission.

Prior art.

In a very fast network with a multidimensional topology, i.e. a network composed of several individual communication networks, a total synchronization is difficult to obtain. The frame repetition frequency must be the same over the whole network, but the individual communication networks can work with different clock and data rates. When the data transmission reaches a rate of an order of magnitude of Gigabit/s the amount of data in a node can grow very fast if the node connects data between two communication networks and the supply of data from one of the networks is faster than the output of data on the other network. As a result buffering problems can occur in such a node.

Description of the invention.

The object of the invention is to eliminate disadvantages of the kind indicated above in very fast networks with a multidimensional topology.

The invention is based upon the realization that this object can be attained, surprisingly enough, by eliminating the need of phase synchronization between the different communication networks, and more particularly by determining, in the method according to the invention, the transmission rate of the individual communication networks by

forming a fixed idle pattern, common to the composite network, and a fixed triggering pattern, and

adding said idle pattern to each time frame sent from a node, followed by said triggering pattern as a means for indicating a start for transmitting a next time frame.

The arrangement according to the invention is characterized by

one node of the composite network being assigned the role as a superior master node which, for determining the transmission rate of the individual communication networks includes

means for forming a fixed idle pattern, common to the composite network, and a fixed triggering pattern, and

means for adding said idle pattern to each time frame transmitted from said superior master node, followed by said fixed triggering pattern as a start of next time frame,

one node of each of said individual networks being assigned the role as a master node for synchronizing the data transmission of the respective network, said master node including means for starting, at the receipt of the triggering pattern in therein, transmission of a new time frame from this master node.

Thus, one node in the composite network is assigned the role as a superior master node determining the transmission speed of the individual communication networks. This is obtained by adding a fixed idle pattern to each time frame sent out from the node, followed by a fixed triggering pattern as a start of the next time frame. At the receipt of the triggering pattern in a master node in an individual communication network, which synchronizes the data transmission of this communication network, the master node starts sending a new time frame.

For maintaining the phase or bit synchronization in an individual communication network, the first node is chosen to be a master. The master node continuously sends out data or a clock pattern. Node number two receives data or a clock pattern so that the PLL (Phase Locked Loop) thereof is locked to the master clock. The clock of the second node will be locked to the master clock at the transmission of data to the other nodes on the bus. In the same way the other nodes will lock their PLL:s to the up-stream PLL.

The superior master determines the transmission speed in the whole composite network. Each individual network therein is locked to this speed for sending out time frames. This is carried through by the superior master starting each frame with the triggering pattern. This pattern is recognized and forwarded by all other nodes down-stream in the network. If one node is master in another network it starts a new frame therein. When a master has stopped sending a frame it waits until it receives the triggering pattern anew before it starts sending a new frame.

Description of the drawings.

The invention will now be described more closely with reference to the drawings, on which

Figure 1 schematically, as an example, shows a smaller section of a network composed by several communication networks,

Figure 2 is a comparative assembly of three time frame sequences appearing in a composite network according to the invention, viz. from a superior master node, a master node in a fast part-network, and a master node in a slow part-network, respectively,

Figure 3 in a similar assembly as in Figure 2 illustrates the action of propagation delay on the frame sequences according to Figure 2,
Figure 4 schematically shows the topology of a network occuring in practice, in which the invention can be used,
Figure 5 shows a schematical block diagram of one embodiment of a receiving master node included in the network according to Figure 4.

Preferred embodiments.

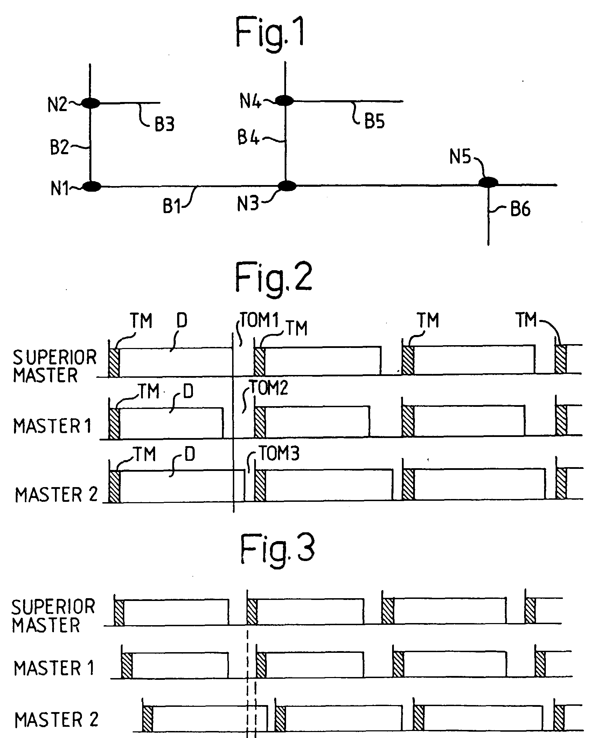

With reference to Figure 1 a composite network is made up of individual communication networks of the time multiplex type. More particularly, these communication networks are exemplified by six buses B1-B6 containing five nodes N1-N5. The nodes N2-N5 are the starting node on each one of the respective buses B3-B6. From the node N1 buses B1 and B2 start. The nodes N3 and N5 are located on the bus B1, the node N2 on the bus B2, and the node N4 on the bus B4.

Each one of the nodes N2-N5 by virtue of its location at the beginning of a bus, has been assigned the role as a master node controlling the frame synchronization on this bus. The node N1 by virtue of its location at the beginning of all buses has been assigned the role as a superior master node controlling the synchronization of the master nodes of these buses.

Although not shown, the buses of the net, of course, include other nodes than master nodes.

The data transmission is divided into time frames, schematically illustrated in Figure 2. The overall cycle time includes, in turn from the beginning of the frame, a fixed triggering pattern TM, data D in a time slots not shown, and a fixed idle pattern TOM.

The idle pattern TOM is stored in the computer of the superior master node and is added by the latter to the time frame as a reaction to a time slot counter included in this node having finished counting. This can e.g. be done, in a way easily realized by the man of the art, by assigning to the time frame an extra time slot obtaining the idle pattern. To the idle pattern a new fixed triggering pattern TM is added as the start of the next time frame.

Each frame is thus started by a triggering pattern TM. This pattern is created and distributed by the master nodes over the buses, such as B1-B6. Nodes downstream detect the pattern and synchronize their logic for a new frame. It does not matter if the data transmission time is not the same on different buses, but the total cycle time has to be the same.

The superior master node N1 starts its frame with the triggering pattern. When this pattern reaches a master node, i.e. one of the nodes N2-N5, this node knows that a new time frame has begun. The master node then starts the frame on its bus, i.e. the respective one of the buses B3-B6, by transmitting a triggering pattern downstream. For obtaining synchronization without the masters beginning to "slip" with respect to each other, each cycle is ended by the idle pattern.

The idle pattern makes possible obtaining cycle synchronization without having complete clock synchronization between the part-networks B1-B6. If the clocks of the master nodes do not work with the same speed the difference is absorbed by the idle pattern. If the clock of one master node is very fast the node has to wait until it receives the trigging pattern before being able to start sending on its bus/buses. On the other hand, if its clock is slow it has the idle time at its disposition for completing its transmission until it receives the triggering pattern informing of the fact that transmission shall start. The empty space sent out by the master nodes will not have the same length. Therefore the idle pattern added by the superior master node has to be long enough for allowing all master nodes to end their transmissions in time for receiving the triggering pattern.

In Figure 2 the frames from one superior master node and two respective master nodes 1 and 2, as an example, are compared with each other. As can be seen the length of the idle pattern TOM1 added by the superior master node is between the empty spaces TOM2 and TOM3, respectively, of the two master nodes. The empty space TOM2 of the master node 1 is the longest one since it sends fastest, whereas the empty space TOM3 of the master node 2 is the shortest one since it sends slowest. As an example the time $t_{TOM}$ of the idle pattern added by the superior master node can be put to:

$$t_{TOM} = 2 \times \Delta f/f \times T,$$

where

$\Delta f/f$ = the accuracy of the oscillator

T = 1/frame repetition frequency.

There will be a short propagation delay before the master node begins its transmission but this delay will be constant throughout the network and does not affect the synchronization. In Figure 3 an example of propagation delay of the masters according to Figure 2 is illustrated.

The method according to the invention can be applied in the MAC-protocol PTM (L. Gauffin, L. Håkansson, B. Pehrson,

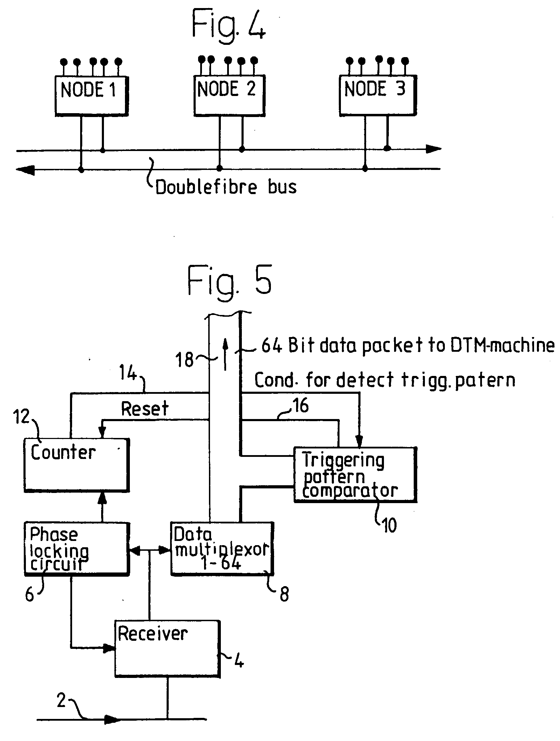

Multi-Gigabit Networking based on PTM, 1:st MultiG workshop, Stockholm, November 1, 1990). This is a connection orientated high speed protocol for Gigabit-networks. The topology thereof is a double fibre bus, shown schematically in Figure 4. PTM stands for Programable Time Multiplex.

The band width is divided into time frames with the length T. Each cycle is divided into N time slots and each time slot is used for transmitting a n-bitframe. From the beginning T=125 µs, N=2048, and n=64 bits.

The main property of the MAC-protocol is that a small number of the time slots (called static slots) are used as control channels between the nodes. All other time slots (called dynamic slots) constitute free band width and are dynamically assigned to nodes. From the beginning the dynamic slots are evenly distributed between all nodes although the distribution is different on each one of the buses.

Another important property of the PTM-network is that each node can be connected to 1, 2 or 3 double fibre buses, and that the contents in a time slot on a double bus can be connected over to a time slot on another double bus.

One of the most interesting aspects of this network with many individuals is that the differences between LAN (Local Area Network), MAN (Medium Area Network) & WAN (Wide Area Network) disappears. In future the fibres of the very fast network are supplied by the telecommunication companies as dark fibres with wall adapters, where the own equipment can be connected.

Frame synchronization in the PTM-network is obtained in the following way.

Each node on the same bus is totally synchronized by use of a PLL. For synchronization between different buses an idle pattern according to the above is used in accordance with the invention. At use of the system with idle pattern and PLL no very accurate clock signals are needed in the nodes. Crystals with a tolerance of 200 ppm can be used.

For avoiding cycle slip the length of the idle pattern has to be longer than the difference in cycle time between the slowest and fastest buses of the network. The maximum difference in cycle time is here 2 x 200 ppm = 400 ppm. A cycle time of T=125μ gives an idle time of 50 ns. If this is translated into bits (a bit = 0,925 ns) this will give a smallest length of the idle pattern of 54 bits. The total number of data bits in a time frame is approximately 130000. This gives an overhead of less than 1 promille.

The PLL must receive a signal for keeping the clock signal stable. The idle pattern is therefore made as a bit sequence. There is no problem using a bit sequence for illustrating idling since the time slot counter will know when the frame has come to an end.

Two things are required by the triggering pattern before a new frame can be started. Firstly, there must be no doubt that it is the quesiton of a triggering pattern. Secondly, the counter in the node must have indicated the end of the frame before the triggering pattern arrives. The idle pattern must be long enough for guaranteeing that the slowest bus will be able to end its frame.

Figure 5 as an example schematically shows the composition of a receiving node in the network according to Figure 4. On the incoming fibre designated 2 either data or a clock pattern will appear. In the way described above, received data are divided into time frames, including triggering pattern, data and idle pattern.

Data or the clock pattern is supplied via the receiver 4 of the receiving node to a phase locking circuit 6 locking the PLL of the node to the clock of a master node. The clock of the receiving node will thereby be locked to the master clock at the transmission of data to other nodes in the network.

Data are furthermore received in a data multiplexor 8 which passes on incomming data divided into 16-bit packets to a triggering pattern comparator 10. In the comparator 10 the fixed triggering pattern is stored for comparison with and identification of the triggering pattern of an incoming time frame, said triggering pattern preceded by the idle pattern being included in the first 16 bit packet. A condition for starting detection of the triggering pattern is obtained from a counter 12 which is controlled by the PLL of the node, and the period of which is similar to the cycle time of a time frame minus the length of the idle pattern.

After having finished counting the counter 12 emits the condition to the comparator 10, indicated by an arrow 14, in the form of a signal to start looking for the triggering pattern. As soon as the triggering pattern has been detected, a reset signal is sent from the comparator 10, indicated by an arrow 16, to the counter 12, which starts a new counting cycle. At the same time transmission is started, indicated by an arrow 18, of data in the form of 64 bit packets to a so called DTM-machine (Distributed Time Multiplex), not shown. Principally, this is a switch having control information for connecting data to one or several receiving units, e.g. an interface of a computer, a node located in the same network or in another one, etcetera.

More closer details regarding the above description, as well as design and function of the networks, busses, nodes and blocks, schematically shown in Figures 1, 4 and 5, appear as self-evident to the man of the art and need therefore not be described more closely here.

**Claims**

1.  A method for synchronizing two or more individual communication networks of the time multiplex type, in order to form a composite network thereof, said individual communication networks having nodes via which cyclic transmission of time frames is performed, said time frames including time slots intended for data transmission, characterized by

    determining the transmission rate of the individual communication networks by
    forming a fixed idle pattern, common to the composite network, and a fixed triggering pattern, and
    adding said idle pattern to each time frame sent from a node, followed by said triggering pattern as a means for indicating a start for transmitting a next time frame.

2.  A method according to claim 1, characterized by

assigning to one node in the composite network the role as a superior master node determining the transmission speed of the individual communication networks by adding said fixed idle pattern to each time frame sent out from said superior master node, followed by said fixed triggering pattern, and

assigning to one node in each of said individual networks the role as a master node synchronizing data transmission of this network,

said triggering pattern at the receipt thereof in one of said master nodes starting transmission of a new time frame from this master node.

3. A method according to claim 1 or 2, characterized by forming the length of the idle pattern substantially greater than the length of the difference between the cycle times of the fastest and slowest communication networks.

4. A method according to any of claims 1-3, characterized by controlling said addition of the fixed idle pattern by means of a counter.

5. An arrangement for synchronizing two or more communication individual networks of the time multiplex type, for forming a composite network thereof, said individual networks having nodes (N1-N5) via which cyclic transmission of time frames is performed, said time frames including time slots intended for data transmission, characterized by

one node (N1) of the composite network being assigned the role as a superior master node which, for determining the transmission rate of the individual communication networks (B1-B6), includes

means for forming a fixed idle pattern (TOM), common to the composite network, and a fixed triggering pattern (TM), and

means for adding said idle pattern to each time frame transmitted from said superior master node, followed by said fixed triggering pattern (TM) as a start of next time frame,

one node of each of said individual networks being assigned the role as a master node (N2-N5) for synchronizing the data transmission of the respective network, said master node including means (8-12) for starting, at the receipt of the triggering pattern in therein, transmission of a new time frame from this master node.

6. An arrangement according to claim 5, characterized in that said means for starting transmission of a new time frame from a master node include

a counter (12), the cycling time of which is similar to the cyling time of a time frame minus the length of the idle pattern, and

a triggering pattern comparator (10) having means for storing the fixed triggering pattern and for comparing it with and identifying a triggering pattern of an incoming time frame, said counter being connected to the comparator for transmitting, after having finished to count, a signal to the comparator to begin detection of an incoming triggering pattern.

**Patentansprüche**

1. Verfahren zur Synchronisierung von zwei oder mehr individuellen Kommunikationsnetzwerken des Zeitmultiplextyps, um daraus ein zusammengesetztes Netzwerk zu bilden, wobei die individuellen Kommunikationsnetzwerke Knoten haben, über welche eine zyklische Übertragung von Zeitrahmen durchgeführt wird, wobei die Zeitrahmen Zeitschlitze einschließen, welche für die Datenübertragung vorgesehen sind, **gekennzeichnet** durch:

Bestimmung der Übertragungsrate der individuellen Kommunikationsnetzwerke durch

Bilden eines festen Leerlaufmusters, welches das zusammengesetzte Netzwerk gemeinsam hat, und eines festen Auslösemusters, und

Hinzufügen des Leerlaufmusters zu jedem Zeitrahmen, welcher von einem Knoten gesendet wird, gefolgt von dem Auslösemuster als einem Mittel zur Anzeige eines Anfangs zur Übertragung eines nächsten Zeitrahmens.

2. Verfahren nach Anspruch 1,

dadurch **gekennzeichnet** daß:

einem Knoten in dem zusammengesetzten Netzwerk die Rolle eines Oberhauptknotens zugeordnet wird, welcher die Übertragungsgeschwindigkeit der individuellen Kommunikationsnetzwerke bestimmt durch Addieren des festen Leerlaufmusters zu jedem von dem Oberhauptknoten ausgesendeten Zeitrahmen, gefolgt von dem festen Auslösemuster, und

einem Knoten in jedem der individuellen Netzwerke die Rolle als Hauptknoten zugeordnet wird, welcher die Datenübertragung dieses Netzwerkes synchronisiert,

wobei das Auslösemuster bei seinem Empfang in einem der Hauptknoten die Übertragung eines neuen Zeitrahmens von diesem Hauptknoten startet.

3. Verfahren nach Anspruch 1 oder 2,

dadurch **gekennzeichnet,** daß
die Länge des Leerlaufmusters wesentlich länger gebildet wird als die Länge der Differenz zwischen den Zykluszeiten der schnellsten und langsamsten Kommunikationsnetzwerke.

4. Verfahren nach einem der Ansprüche 1 bis 3, dadurch **gekennzeichnet,** daß
die Hinzufügung des festen Leerlaufmusters mittels eines Zählers gesteuert wird.

5. Eine Anordnung zur Synchronisierung von zwei oder mehr individuellen Kommunikationsnetzwerken des Zeitmultiplextyps, um daraus ein zusammengesetztes Netzwerk zu bilden, wobei die individuellen Netzwerke Knoten (N1-N5) haben, über welche die zyklische Übertragung von Zeitrahmen durchgeführt wird, wobei die Zeitrahmen für die Datenübertragung vorgesehene Zeitschlitze haben,

dadurch **gekennzeichnet,** daß

einem Knoten (N1) des zusammengesetzten Netzwerks die Rolle als Oberhauptknoten zugeordnet wird, welcher zur Bestimmung der Übertragungsrate der individuellen Kommunikationsnetzwerke (B1-B6)

eine Vorrichtung zur Bildung eines festen Leerlaufmusters (TOM), welches das zusammengesetzte Netzwerk gemeinsam hat, und zur Bildung eines festen Auslösemusters (TM) enthält, und

eine Vorrichtung zur Addierung des Leerlaufmusters zu jedem von dem Oberhauptknoten übertragenen Zeitrahmen, gefolgt von dem festen Auslösemuster (TM) als einem Anfang des nächsten Zeitrahmens,

wobei einem Knoten jedes individuellen Netzwerkes die Rolle als Hauptknoten (N2-N5) zur Synchronisierung der Datenübertragung des jeweiligen Netzwerkes zugeordnet wird, wobei der Hauptknoten eine Einrichtung (8-12) enthält, um beim Empfang des Auslösemusters die Übertragung eines neuen Zeitrahmens von diesem Hauptknoten zu starten.

6. Anordnung nach Anspruch 5,

dadurch **gekennzeichnet,** daß

die Vorrichtung zum Starten der Übertragung eines neuen Zeitrahmens von einem Hauptknoten enthält:

einen Zähler (12), dessen Taktzeit ähnlich der Taktzeit eines Zeitrahmens abzüglich der Länge des Leerlaufmusters ist, und

einen Auslösemustervergleicher (10), der eine Vorrichtung hat zur Speicherung des festen Auslösemusters und für dessen Vergleich mit einem Auslösemuster eines ankomenden Zeitrahmens und der Identifizierung eines Auslösemusters eines ankommenden Zeitrahmens,

wobei der Zähler mit dem Vergleicher verbunden ist, um nach dem Ablauf des Zählens ein Signal an den Vergleicher zu übertragen, daß die Erfassung eines ankommenden Auslösemusters begonnen werde.

## Revendications

1. Procédé pour synchroniser au moins deux réseaux de télécommunication individuels du type à multiplex temporel, dans le but de former un réseau composite de ceux-ci, ces réseaux de télécommunication individuels ayant des noeuds par l'intermédiaire desquels une transmission cyclique de trames temporelles est effectuée, ces trames temporelles comprenant des créneaux temporels qui sont destinés à la transmission de données, caractérisé en ce que

on détermine la cadence de transmission des réseaux de télécommunication individuels, en formant une configuration de repos fixe, commune au réseau composite, et une configuration de déclenchement fixe, et
on ajoute cette configuration de repos à chaque trame temporelle émise par un noeud, en la faisant suivre par la configuration de déclenchement, à titre de moyen pour indiquer un point de commencement pour la transmission d'une trame temporelle suivante.

2. Procédé selon la revendication 1, caractérisé en ce que :

on attribue à un noeud dans le réseau composite le rôle d'un noeud maître supérieur, déterminant la vitesse de transmission des réseaux de télécommunication individuels, en ajoutant la configuration de repos fixe à chaque trame temporelle qui est émise par le noeud maître supérieur, et en la faisant suivre par la configuration de déclenchement fixe, et
on attribue à un noeud dans chacun des réseaux individuels le rôle d'un noeud maître synchronisant la transmission de données de ce réseau,
la réception de la configuration de déclenchement dans l'un des noeuds maîtres déterminant le commencement de la transmission d'une nouvelle trame temporelle à partir de ce noeud maître.

3. Procédé selon la revendication 1 ou 2, caractérisé en ce qu'on fixe la longueur de la configuration de repos de façon qu'elle soit notablement plus grande que la longueur de la différence entre les périodes de cycle du réseau de télécommunication le plus rapide et du réseau de télécommunication le plus lent.

4. Procédé selon l'une quelconque des revendications 1-3, caractérisé en ce qu'on commande l'ajout de la configuration de repos fixe au moyen d'un compteur.

5. Dispositif pour synchroniser au moins deux réseaux de télécommunication individuels du type à multiplexage temporel, pour former un réseau composite de ceux-ci, ces réseaux individuels ayant des noeuds (N1-N5) par l'intermédiaire desquels la transmission de trames temporelles est effectuée, ces trames temporelles comprenant des créneaux temporels qui sont destinés à la transmission de données, caractérisé par :

l'attribution à un noeud (N1) du réseau composite du rôle d'un noeud maître supérieur qui, pour la détermination de la cadence de transmission des réseaux de télécommunication (B1-B6) individuels, comprend :
des moyens pour former une configuration de repos (TOM) fixe, commune au réseau composite, et une configuration de déclenchement (TM) fixe, et
des moyens pour ajouter la configuration de repos à chaque trame temporelle transmise à partir du noeud maître supérieur, la configuration de repos étant suivie par la configuration de déclenchement (TM) fixe, à titre de début de la trame temporelle suivante, et
l'attribution à un noeud de chacun des réseaux individuels du rôle d'un noeud maître (N2-N5) pour synchroniser la transmission de données du réseau respectif, ce noeud maître comprenant des moyens (8-12) pour commencer, à la réception de la configuration de déclenchement dans ce noeud, la transmission d'une nouvelle trame temporelle à partir de ce noeud maître.

6. Dispositif selon la revendication 5, caractérisé en ce que les moyens destinés à commencer la transmission d'une nouvelle trame temporelle à partir d'un noeud maître comprennent

un compteur (12) dont la période de cycle est similaire à la période de cycle d'une trame temporelle, moins la longueur de la configuration de repos, et
un comparateur de configurations de déclenchement (10) comportant des moyens pour enregistrer la configuration de déclenchement fixe et pour la comparer avec une configuration de déclenchement d'une trame temporelle entrante, ainsi que pour identifier celle-ci,
le compteur étant connecté au comparateur pour transmettre un signal au comparateur, une fois que le comptage est terminé, pour commencer la détection d'une configuration de déclenchement entrante.

# Fig.1

# Fig.2

# Fig.3

# Fig. 4

Doublefibre bus

# Fig. 5

64 Bit data packet to DTM-machine

Cond. for detect trigg. patern

Reset

Counter

Triggering pattern comparator

Phase locking circuit

Data multiplexor 1-64

Receiver